# EUROPÄISCHE PATENTANMELDUNG

(11) **EP 2 653 527 A1**
(43) Veröffentlichungstag der Anmeldung: **23.10.2013**
(21) Anmeldenummer: 13001813.8
(22) Anmeldetag: 09.04.2013
(51) Int. Cl.: C10L 1/18, C10G 3/00

(54) **Extraktion von Öl durch Pulsentladungen**

(30) Priorität: 17.04.2012 DE 102012007500
(71) Anmelder: EADS Deutschland GmbH, 85521 Ottobrunn (DE)
(72) Erfinder: Steinwandel, Jürgen, 88690 Uhldingen-Mühlhofen (DE); Heckenberger, Ulrike, 81886 München (DE); Lenczowski, Blanka, 85579 Neubiberg (DE)

(57) **Zusammenfassung**

Die vorliegende Erfindung betrifft die Extraktion von Ölen zur Gewinnung von Kohlenwasserstoffen für Fahrzeugkraftstoffe aus Pflanzenmaterial. Um dies mit möglichst geringem Aufwand durchführen zu können, wird ein System (10) beschrieben, das eine Aufnahmevorrichtung (12) aufweist mit einem Volumen zur Aufnahme eines flüssigen Gemischs (14), welches ölhaltige Pflanzenteile und eine Trägerflüssigkeit aufweist, wobei die ölhaltigen Pflanzenteile zelluläre Membranen aufweisen, die Bereiche mit Öl umschließen. Außerdem ist wenigstens ein erstes Elektrodenpaars (16) mit beabstandeten Elektroden in dem Aufnahmevolumen angeordnet, und eine Spannungszufuhrvorrichtung (18) zum Zuführen wenigstens eines Spannungsimpulses an die Elektroden. Der Spannungsimpuls kann mittels der Spannungszufuhrvorrichtung derart hoch zugeführt werden, dass eine Durchbruchspannung zwischen den beiden Elektroden in der Trägerflüssigkeit überschritten ist und ein Funke zwischen den Elektroden erzeugt werden kann, so dass ein lokales Verdampfen der Trägerflüssigkeit auftritt. Mit dem Verdampfen wird eine Welle mit einem derart starken Druckgradienten in dem flüssigen Gemisch erzeugt, dass der Druckgradient beim Auftreffen auf eine zelluläre Membran einen derart hohen Scherkraftgradienten aufweist, dass die zelluläre Membran aufbricht und das Öl freigesetzt ist.

## Beschreibung

Die vorliegende Erfindung betrifft ein System zur Extraktion von Ölen zur Gewinnung von Kohlenwasserstoffen für Fahrzeugkraftstoffe aus Pflanzenmaterial, ein Verfahren zur Extraktion von Ölen zur Gewinnung von Kohlenwasserstoffen für Fahrzeugkraftstoffe sowie die Verwendung einer Plasmaentladungsvorrichtung zur Induktion von Verdichtungsstößen in einem flüssigen Gemisch.

Zur Gewinnung von Kraftstoffen aus nachwachsendem Pflanzenmaterial werden die in dem Pflanzenmaterial enthaltenen Öle zur Weiterverarbeitung extrahiert. Als Pflanzenmaterial kommen beispielsweise auf dem Land anbaubare Pflanzen wie Raps zur Anwendung. Darüber hinaus kommen z.B. auch Algen in Frage, bei denen Kohlenwasserstoffe aus Algenöl gewonnen werden können, das in den Pflanzen enthalten ist. Grundsätzlich kann Öl aus beispielsweise Algen durch Pressen abgetrennt werden, was jedoch aufgrund der vergleichsweise stabilen zellulären Membranen, die das Öl von anderen Bereichen abschirmen, einen hohen Aufwand erfordert. Da manche der in Frage kommenden Algen auch eine relativ hohe chemische Stabilität der zellulären Membranen aufweisen, kommen andere bekannte Extraktionsmittel, wie z.B. Benzol, Hexan oder andere, zwar in Frage, sind jedoch auch mit einem relativ hohen Aufwand verbunden.

Eine Aufgabe der vorliegenden Erfindung besteht daher darin, eine Möglichkeit der Extraktion von Ölen aus Pflanzenmaterial mit möglichst geringem Aufwand zur Verfügung zu stellen für ein wirtschaftliches Kraftstoffproduktionsverfahren aus Pflanzenmaterial.

Diese Aufgabe wird durch ein System zur Extraktion von Ölen zur Gewinnung von Kohlenwasserstoffen für Fahrzeugkraftstoffe und ein Verfahren zur Extraktion von Ölen zur Gewinnung von Kohlenwasserstoffen für Fahrzeugkraftstoffe, sowie die Verwendung einer Plasmaentladungsvorrichtung zur Induktion von Verdichtungsstößen in einem flüssigen Gemisch nach einem der unabhängigen Ansprüche erreicht. Beispielhafte Ausführungsformen sind in den abhängigen Ansprüchen dargestellt.

Gemäß einem ersten Aspekt der Erfindung ist ein System zur Extraktion von Ölen zur Gewinnung von Kohlenwasserstoffen für Fahrzeugkraftstoffe vorgesehen, das eine Aufnahmevorrichtung aufweist. Die Aufnahmevorrichtung weist ein Volumen zur Aufnahme eines flüssigen Gemischs auf, welches ölhaltige Pflanzenteile und eine Trägerflüssigkeit aufweist. Die ölhaltigen Pflanzenteile weisen dabei zelluläre Membranen auf, die Bereiche mit Öl umschließen. Das System weist wenigstens ein erstes Elektrodenpaar in dem Aufnahmevolumen auf, wobei die Elektroden beabstandet voneinander angeordnet sind. Außerdem ist eine Spannungszufuhrvorrichtung zum Zuführen wenigstens eines Spannungsimpulses an die Elektroden vorgesehen. Der wenigstens eine Spannungsimpuls ist mittels der Spannungszufuhrvorrichtung derart hoch zuführbar, dass eine Durchbruchspannung zwischen den beiden Elektroden in der Trägerflüssigkeit überschritten ist und ein Funke zwischen den Elektroden erzeugbar ist, so dass ein lokales Verdampfen der Trägerflüssigkeit bewirkbar ist. Mit dem Verdampfen ist eine Welle mit einem derart starken Druckgradienten in dem flüssigen Gemisch erzeugbar, dass der Druckgradient beim Auftreffen auf eine zelluläre Membran einen derart hohen Scherkraftgradienten aufweist, dass die zelluläre Membran aufbricht und das Öl freigesetzt ist.

Durch die Zuführung des Spannungsimpulses kann in der Flüssigkeit eine Plasmaentladung erreicht werden, um damit einen oder mehrere Verdichtungsstöße induzieren zu können. Dazu können beispielweise Kurzpuls/Hochstromtechniken eingesetzt werden, um zum einen relativ energiereiche Einzelentladungen darstellen zu können, und um zum anderen die Bedingungen zur Ausbildung von Stoßwellen bereitzustellen. Die Stoßwellen bewirken eine mechanische Wechselwirkung an den zellulären Membranen, welche dadurch zerstört werden können, um, beispielweise in einer wässrigen Lösung, das Pflanzenöl isolieren zu können.

Gemäß einem Ausführungsbeispiel ist die Spannungszufuhrvorrichtung für die Erzeugung eines Kurzpulses ausgebildet, der eine Impulszeit aufweist, die maximal im Mikro-Sekundenbereich liegt.

Der Funkendurchschlag bewirkt ein Auslösen einer Druckwelle. Der Abstand der Elektroden beträgt beispielsweise 5 bis 10 mm, und als Spannung wird ein Bereich von 5 kV bis 15 kV vorgesehen. Der Entladestrom-Impulsbereich beträgt beispielweise 100 bis 1000 A, und die Pulsdauer beträgt 1 bis 100 µs.

Das flüssige Gemisch weist eine Lösung von Pflanzenteilen in Wasser auf, mit einem Verhältnis von 10 % bis 40 % Masseanteil in der Flüssigkeit. Das flüssige Gemisch ist z.B. eine verdünnte Algenlösung, wobei der Begriff "verdünnt" eine Lösung mit 10 % bis 40 % Masseanteil bezeichnet.

Gemäß einem weiteren Ausführungsbeispiel erzeugt die Spannungszufuhrvorrichtung Spannungsimpulse, die eine Einzelpuls-Energie von mindestens ca. 500 Millijoule aufweisen. Die Einzelpuls-Energie weist beispielweise einen Wert im oberen Millijoule-Bereich bis ca. 100 Joule auf.

Gemäß einem Ausführungsbeispiel erzeugt die Spannungszufuhrvorrichtung Spannungsimpulse, die eine Repetitionsrate von mindestens ca. 0,5 Hz aufweisen. Die Repetitionsrate bezeichnet die Pulsfolgefrequenz, und beträgt z.B. 1 bis 10 Hz.

Gemäß einem Ausführungsbeispiel weist die Spannungszufuhrvorrichtung eine elektrische Energieversorgung, eine Speichereinrichtung zum temporären Speichern von elektrischer Spannung, und eine Steuervorrichtung zum Kontrollieren einer Entladung der in der Speichereinrichtung gespeicherten elektrischen Spannung auf.

Gemäß einem Ausführungsbeispiel weist die Speichereinrichtung wenigstens eine Kondensatorbank aus mehreren Kondensatoren auf, mit denen Hochspannungspulse erzeugbar sind.

Gemäß einem zweiten Aspekt der Erfindung ist ein Verfahren zur Extraktion von Ölen zur Gewinnung von Kohlenwasserstoffen für Fahrzeugkraftstoffe vorgesehen, das die folgenden Schritte aufweist:
a) Zurverfügungstellen eines flüssigen Gemischs von ölhaltigen Pflanzenteilen und einer Trägerflüssigkeit; wobei die ölhaltigen Pflanzenteile zelluläre Membranen aufweisen, die Bereiche mit Öl umschließen;
b) Anordnen wenigstens eines Elektrodenpaars in der Flüssigkeit, bei dem die Elektroden beabstandet voneinander sind; und
c) Anlegen wenigstens eines Spannungsimpulses zwischen den Elektroden des wenigstens einen Elektrodenpaars; wobei der wenigstens eine

Spannungsimpuls derart hoch ist, dass eine Durchbruchspannung zwischen dem beiden Elektroden in der Trägerflüssigkeit überschritten wird und ein Funke zwischen den Elektroden erzeugt wird, so dass es zu einem lokalen Verdampfen der Trägerflüssigkeit kommt; wobei das Verdampfen eine Welle mit einem derart starken Druckgradienten in dem flüssigen Gemisch erzeugt, dass der Druckgradient beim Auftreffen auf eine zelluläre Membran einen derart hohen Scherkraftgradienten aufweist, so dass es zu einem Aufbrechen der zellulären Membran kommt und das Öl freigesetzt wird.

Das flüssige Gemisch kann beispielweise vorbehandelt werden, um die zellulären Membranen, d.h. die Zellwände zu schwächen, z.B. mit Enzymen. Als Vorbehandlung kommen auch andere Verfahren in Frage, wie beispielweise Heißdampf-/Heißgasbehandlung oder Chemikalien bzw. Lösungsmittel. Mit der Vorbehandlung werden die Proteinhüllen aufgebrochen, um die eingeschlossenen Öle freisetzen zu können.

Gemäß einem Ausführungsbeispiel wird ein Spannungsimpuls derart angelegt, dass es zur Ausbildung einer Stoßfront kommt.

Der Begriff "Stoßfront" wird auch als "Stoßwelle" bezeichnet und bezieht sich auf Diskontinuitäten in der Mischung (dichtes Material), wobei die Diskontinuitäten durch extrem starke Druckgradienten charakterisiert sind. Als Druck kommt beispielweise eine Festkörperstoßwelle im Bereich von 10 bis 1000 kbar zur Anwendung.

Bereits ein einmaliges Zünden, d.h. Erzeugen eines einzelnen Funkendurchschlags ist ausreichend, um eine Stoßfront zu erzeugen. Der zeitliche Verlauf einer Funkenentladung führt zur Ausbreitung einer Stoßfront.

Gemäß einem Ausführungsbeispiel sind die Pflanzenteile Algen und die Trägerflüssigkeit ist Wasser. Die Stoßwelle ruft eine mechanische Wechselwirkung mit der zellulären Membran hervor, wobei die Welle in der Lage ist, auch stabile zelluläre Membranen zu zerstören und das Pflanzenöl, z.B. Algenöl, in der wässrigen Lösung zu isolieren.

Gemäß einem Ausführungsbeispiel wird durch das Anlegen der Spannungsimpulse ein Öl-Wasser-Biomassen-Gemisch erzeugt, wobei in einem weiteren Schritt d) ein Separieren des Öls und des Wassers erfolgt für weitere Aufbereitungsschritte zur Herstellung von Kraftstoff für Fahrzeuge.

Das Separieren erfolgt z.B. durch: i) Filtration, ii) Phasentrennung, iii) Anwendung von Tensiden, und/oder iv) Trenndüsenverfahren.

Gemäß einem Ausführungsbeispiel wird die Stoßwelle in dem flüssigen Gemisch erzeugt, welches durch die Stoßwelle selbst derart verändert bzw. zerstört wird, dass das flüssige Gemisch in mehrere seiner Einzelteile zerlegt wird.

Das Gemisch dient beispielweise nicht nur dazu, durch Anlegen des Spannungspulses eine Plasmaentladung in dem Gemisch zu erzeugen, um damit die Druckwelle zu erzeugen, sondern ist als Gemisch auch Ziel der bezweckten mechanischen Wirkung der Druckwelle. Das Gemisch ist folglich nicht nur für Erzeugung und auch Weiterleitung der Druckwelle bestimmt, sondern eigentliches Medium der Anwendung der Druckwelle.

Gemäß einem dritten Aspekt der Erfindung ist die Verwendung einer Plasmaentladungsvorrichtung zur Induktion von Verdichtungsstößen in einem flüssigen Gemisch vorgesehen. Das flüssige Gemisch weist eine Trägerflüssigkeit und ölhaltige Pflanzenteile auf, die zelluläre Membranen aufweisen, welche Bereiche mit Öl umschließen. Die Plasmaentladungsvorrichtung bewirkt mittels Spannungsimpulsen ein lokales Verdampfen des flüssigen Gemischs, wodurch Druckgradienten in dem flüssigen Gemisch entstehen, die beim Auftreffen auf eine zelluläre Membran einen derart hohen Scherkraftgradienten aufweisen, dass die zelluläre Membran aufbricht und das Öl freigesetzt wird.

Gemäß einem Aspekt der Erfindung ist vorgesehen, das in dem Pflanzenmaterial enthaltene Öl, wie dies beispielweise bei Algen der Fall ist, freizulegen, indem die Hülle durch mechanische Einwirkung aufgebrochen wird. Anstelle einer von außen auf die Flüssigkeit als Ganzes einwirkenden Presskraft ist vorgesehen, innerhalb der Flüssigkeit selbst Plasmaentladungen zu erzeugen, die dann in direkter Nähe, da in der Flüssigkeit selbst, auf die das Öl einschließenden Membranen, bzw. das Zellwandmaterial, zerstörend einwirken können. Dadurch wird ein Aufbrechen der Zellstrukturen erreicht, welches zum einen eine große Effizienz aufweist, und zum anderen auch ohne zusätzliche, beispielweise chemische Mittel auskommt. Das Wasser-Pflanzenmaterial-Gemisch wird folglich auch nicht zwangsläufig durch Chemikalien bzw. Lösungsmittel verunreinigt, was für die weitere Verwendung des Pflanzenmaterials als Abfallstoff des Extraktionsvorgangs Vorteile bedeuten kann. Beispielweise kann das übrig gebliebene Pflanzenmaterial wieder anderen pflanzlichen Kreisläufen oder auch - im Zusammenhang mit Lebensmittelproduktion - der Nahrungskette wieder zugeführt werden, beispielweise als Tierfutter.

Es sei darauf hingewiesen, dass die Merkmale der Ausführungsbeispiele und Aspekte der Vorrichtungen auch für Ausführungsformen des Verfahrens sowie Verwendung der Vorrichtung gelten und umgekehrt. Außerdem können auch diejenigen Merkmale frei miteinander kombiniert werden, bei denen dies nicht explizit erwähnt ist.

Nachfolgend wird anhand der beigefügten Zeichnungen näher auf Ausführungsbeispiele der Erfindung eingegangen. Es zeigen:
- **Fig. 1**: ein System zur Extraktion von Ölen zur Gewinnung von Kohlenwasserstoffen für Fahrzeugkraftstoffe gemäß einem Ausführungsbeispiel der Erfindung;
- **Fig. 2**: ein weiteres Ausführungsbeispiel eines erfindungsgemäßen Systems;
- **Fig. 3**: ein weiteres Ausführungsbeispiel des Systems gemäß der Erfindung;
- **Fig. 4**: ein Entladungsdiagramm gemäß einem Ausführungsbeispiel der Erfindung;
- **Fig. 5**: Verfahrensschritte eines Ausführungsbeispiels eines Verfahrens zur Extraktion von Ölen zur Gewinnung von Kohlenwasserstoffen für Fahrzeugkraftstoffe gemäß der vorliegenden Erfindung; und
- **Fig. 6**: ein weiteres Ausführungsbeispiel eines erfindungsgemäßen Verfahrens.

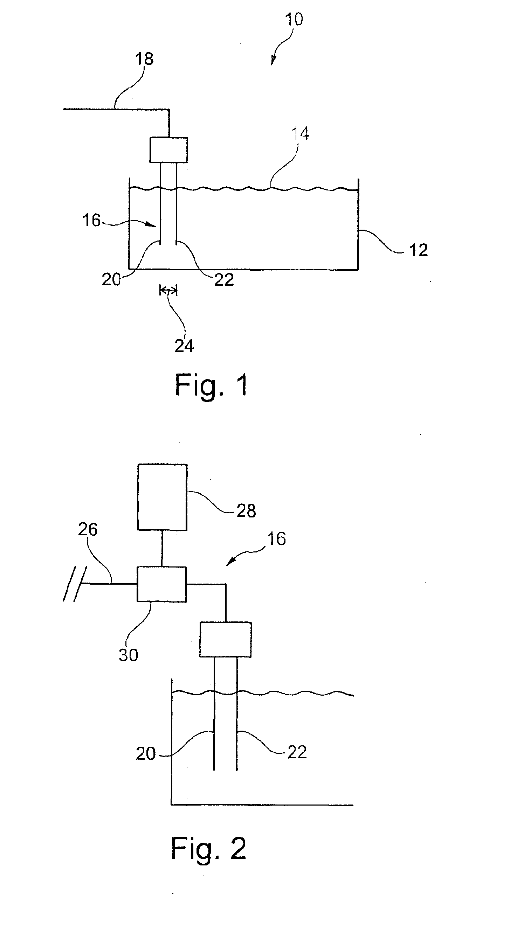

Fig. 1 zeigt ein System 10 zur Extraktion von Ölen für die Gewinnung von Kohlenwasserstoffen für Fahrzeugkraftstoffe. Das System 10 weist eine Aufnahmevorrichtung 12 auf, mit einem Volumen zur Aufnahme eines flüssigen Gemischs 14, das ölhaltige Pflanzenteile und eine Trägerflüssigkeit aufweist, beispielweise Wasser. Die ölhaltigen Pflanzenteile weisen zelluläre Membranen auf, die Bereiche mit Öl umschließen. Das System 10 weist wenigstens ein erstes Elektrodenpaar 16 auf, das in dem Aufnahmevolumen angeordnet ist, wobei die Elektroden beabstandet voneinander angeordnet sind. Außerdem ist eine Spannungszufuhrvorrichtung 18 vorgesehen, um wenigstens einen Spannungsimpuls an die Elektroden zuzuführen. Das Elektrodenpaar 16 weist beispielweise eine erste Elektrode 20 und eine zweite Elektrode 22 auf, die in einem Abstand 24 zueinander vorgesehen sind.

Mit der Spannungszufuhrvorrichtung 18 kann ein Spannungsimpuls derart hoch zugeführt werden, dass eine Durchbruchspannung zwischen den beiden Elektroden 20, 22 in der Trägerflüssigkeit 14 überschritten ist, und ein Funke (nicht dargestellt) zwischen den Elektroden erzeugt werden kann, so dass ein lokales Verdampfen der Trägerflüssigkeit bewirkt werden kann. Mit dem Verdampfen kann eine Welle mit einem derart starken Druckgradienten in dem flüssigen Gemisch erzeugt werden, dass der Druckgradient beim Auftreffen auf eine zelluläre Membran einen derart hohen Scherkraftgradienten aufweist, dass die zelluläre Membran aufbricht und das Öl freigesetzt ist.

Der Funkendurchschlag bewirkt dabei ein Auslösen der Druckwelle. Die Spannungszufuhrvorrichtung 18 ist daher für die Erzeugung eines Kurzpulses ausgebildet, der eine Impulszeit im Mikro-Sekundenbereich aufweist. Beispielweise ist der Abstand der Elektroden mit 5 bis 10 mm vorgesehen, und die Spannung beträgt z.B. 5 bis 15 kV. Als Entladestrom wird im Pulsbereich ein Strom von 100 bis 1000 A vorgesehen. Die Pulsdauer beträgt dabei 1 bis 100 µs.

Die Einzelpuls-Energie beträgt beispielweise 500 Millijoule oder mehr. Es können mehrere Pulse hintereinander in einer Pulsfolgefrequenz von 1 bis 10 Hz erzeugt werden.

Das flüssige Gemisch 14 ist eine Lösung von Pflanzenteilen in Wasser und weist ein Verhältnis von 10 % bis 40 % Masseanteil in der Flüssigkeit auf. Beispielweise handelt es sich bei dem flüssigen Gemisch 14 um eine verdünnte Algenlösung.

Gemäß dem in Fig. 2 gezeigten Ausführungsbeispiel weist die Spannungszufuhrvorrichtung 18 eine elektrische Energieversorgung 26 und eine Speichereinrichtung 28 zum temporären Speichern von elektrischer Spannung auf. Außerdem ist eine Steuervorrichtung 30 zum Kontrollieren einer Entladung der in der Speichereinrichtung gespeicherten elektrischen Spannung vorgesehen. Es sei darauf hingewiesen, dass Fig. 2 lediglich ein Anordnungsschema darstellt, und kein Schaltdiagramm.

Die Speichereinrichtung weist beispielweise eine Kondensatorbank (nicht näher gezeigt) aus mehreren Kondensatoren auf, mit denen Hochspannungspulse erzeugt werden können.

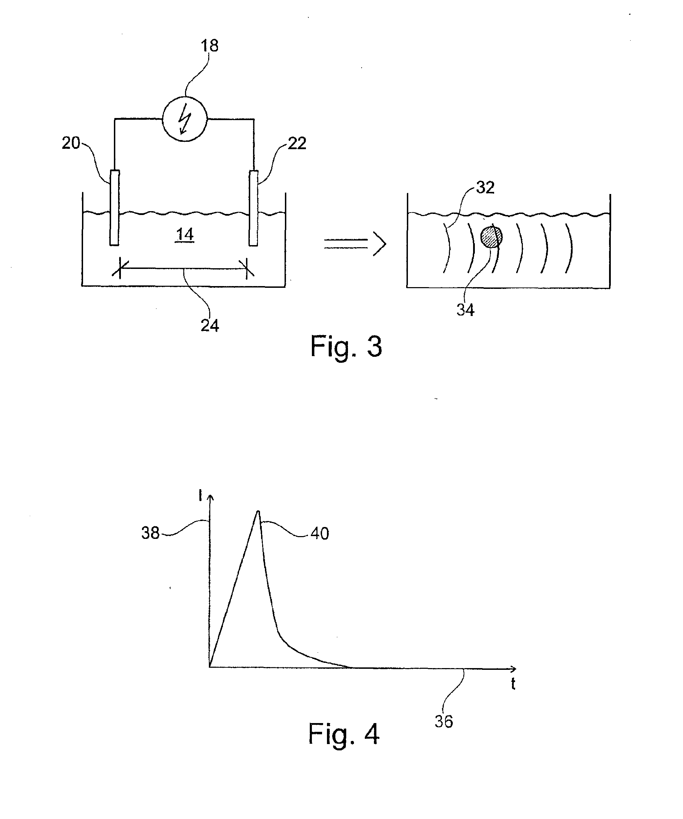

In Fig. 3 ist im linken Teil schematisch gezeigt, wie die erste Elektrode 20 und die zweite Elektrode 22 in dem flüssigen Gemisch 14 mit dem Abstand 24 zueinander angeordnet sind. Die Spannungszufuhrvorrichtung 18 ist vereinfacht als elektrische Energiequelle dargestellt. Durch Anlegen eines Spannungspulses an den beiden Elektroden 20, 22 kann bei Überschreiten der Durchbruchspannung, die abhängig von der verwendeten Flüssigkeit bzw. des flüssigen Gemischs ist, ein Funke erzeugt werden. Dies führt zu einer lokalen Verdampfung und damit zu einem Druckgradienten, der im rechten Teil der Fig. 3 als Stoßfront bzw. Stoßwelle 32 dargestellt ist. Diese Stoßfront pflanzt sich durch die Flüssigkeit hindurch fort und trifft so beispielweise auch auf ein schematisch dargestelltes Pflanzensegment 34 und übt dabei eine mechanische Wirkung aus, die bereits oberhalb erwähnt wurde. Wenn die Stoßwelle einen Druckgradienten erzeugt, der beim Auftreffen auf eine zelluläre Membran einen derart hohen Scherkraftgradienten aufweist, dass die zelluläre Membran aufbricht, wird eingeschlossenes Öl freigesetzt, welches anschließend separiert werden kann.

Fig. 4 zeigt schematisch ein Diagramm, bei dem auf einer horizontalen Achse 36 die Zeit *t* aufgetragen ist und auf einer vertikalen Achse 38 ein Strom *l*. Ein Graph 40 illustriert den erfindungsgemäß vorgesehenen Kurzpuls mit einer hohen Stromdichte.

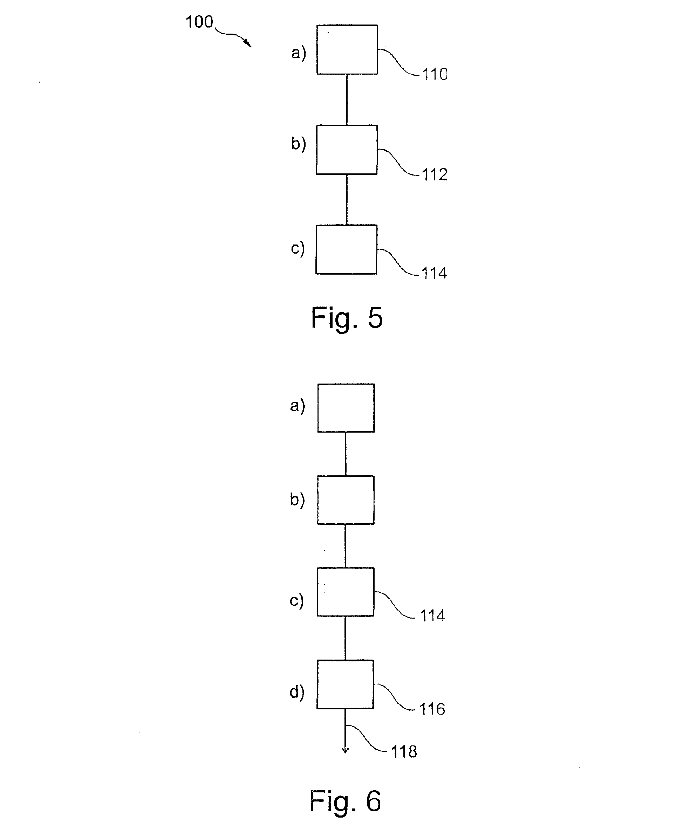

In Fig. 5 ist ein Verfahren 100 zur Extraktion von Ölen zur Gewinnung von Kohlenwasserstoffen für Fahrzeugkraftstoffe vorgesehen. In einem ersten Schritt 110 wird ein flüssiges Gemisch von ölhaltigen Pflanzenteilen und einer Trägerflüssigkeit zur Verfügung gestellt, wobei die ölhaltigen Pflanzenteile zelluläre Membranen aufweisen, die Bereiche mit Öl umschließen. In einem zweiten Schritt 112 wird wenigstens ein Elektrodenpaar, bei dem die Elektroden voneinander beabstandet sind, in der Flüssigkeit angeordnet. Anschließend erfolgt einem dritten Schritt 114 ein Anlegen wenigstens eines Spannungsimpulses zwischen den Elektroden des wenigstens einen Elektrodenpaars. Der wenigstens eine Spannungsimpuls ist dabei derart hoch, dass eine Durchbruchspannung zwischen den beiden Elektroden in der Trägerflüssigkeit überschritten wird und ein Funke zwischen den Elektroden erzeugt wird, so dass es zu einem lokalen Verdampfen der Trägerflüssigkeit kommt. Das Verdampfen erzeugt eine Welle mit einem derart starken Druckgradienten in dem flüssigen Gemisch, dass der Druckgradient beim Auftreffen auf eine zelluläre Membran einen derart hohen Scherkraftgradienten aufweist, dass es zu einem Aufbrechen der zellulären Membran kommt und das Öl freigesetzt wird.

Der erste Schritt 110 wird auch als Schritt a) bezeichnet, der zweite Schritt 112 als Schritt b) und der dritte Schritt 114 als Schritt c).

In Schritt c) können beispielweise eine Vielzahl von Spannungsimpulsen hintereinander vorgesehen werden, um in dem flüssigen Gemisch über einen Zeitraum auf die zellulären Membranen einzuwirken, um eine entsprechende größere Ölmenge freizusetzen.

Je nach verwendetem Pflanzenmaterial kann das flüssige Gemisch auch vorbehandelt werden, um die zellulären Membranen, d.h. die Zellwände, bereits im Vorfeld zu schwächen. Dies kann beispielweise mit Enzymen erfolgen. Es kommen aber auch andere Verfahren zur Vorbehandlung in Frage, wie beispielweise Heißsandbehandlung oder Chemikalien, bzw. Lösungsmittel, was jedoch auch im Zusammenhang mit der späteren Verwendung des Abfallmaterials gewählt werden kann. Bei einer geschwächten Zellwand kann dann auch ein niedriger Druckgradient ausreichend sein, um die Zellwand aufzubrechen, um das Öl freisetzen zu können. Die Vorbehandlung erlaubt also einen niedrigeren Druckgradienten, folglich auch ein geringeres Maß an verdampfter Flüssigkeit bei der Funkenerzeugung. Mit anderen Worten, die Vorbehandlung kann dazu genutzt werden, eine niedrigere elektrische Energie zuführen zu können.

Wie in Fig. 6 gezeigt ist, wird durch das Anlegen der Spannungsimpulse ein Öl-Wasser-Biomassen-Gemisch erzeugt, so dass in einem weiteren, d.h. vierten Schritt 116 ein Separieren des Öls und des Wassers erfolgen kann, für weitere Aufbereitungsschritte, die symbolisch mit einem Pfeil 118 angedeutet sind, zur Herstellung von Kraftstoff für Fahrzeuge. Das Separieren kann beispielweise durch Filtration, Phasentrennung, Tenside oder auch Trenndüsenverfahren erfolgen. Der vierte Schritt 116 wird auch als Schritt d) bezeichnet.

Gemäß der vorliegenden Erfindung ist vorgesehen, dass durch Anlegen des Spannungsimpulses im dritten Schritt 114, d.h. Schritt c), die Stoßwelle in dem flüssigen Gemisch erzeugt wird und dabei das flüssige Gemisch durch die Stoßwelle selbst derart verändert wird, dass das flüssige Gemisch in mehrere seiner Einzelteile zerlegt wird.

Die oberhalb beschriebenen Ausführungsbeispiele können in unterschiedlicher Art und Weise kombiniert werden. Insbesondere können auch Aspekte des Verfahrens für Ausführungsformen der Vorrichtungen sowie Verwendung der Vorrichtungen verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele und Aspekte beschrieben worden sind, auch in Kombination mit anderen Merkmalen oder Schritten anderer, oben beschriebener Ausführungsbeispiele und Aspekte verwendet werden können. Bezugszeichen in den Ansprüchen sind nicht als Einschränkung anzusehen.

## Patentansprüche

1. System (10) zur Extraktion von Ölen zur Gewinnung von Kohlenwasserstoffen für Fahrzeugkraftstoffe, aufweisend:
- eine Aufnahmevorrichtung (12) mit einem Volumen zur Aufnahme eines flüssigen Gemischs (14), das ölhaltige Pflanzenteile und eine Trägerflüssigkeit aufweist; wobei die ölhaltigen Pflanzenteile zelluläre Membranen aufweisen, die Bereiche mit Öl umschließen;
- wenigstens ein erstes Elektrodenpaar (16) in dem Aufnahmevolumen, wobei die Elektroden beabstandet angeordnet voneinander sind; und
- eine Spannungszufuhrvorrichtung (18) zum Zuführen wenigstens eines Spannungsimpulses an die Elektroden;
wobei der wenigstens eine Spannungsimpuls mittels der Spannungszufuhrvorrichtung derart hoch zuführbar ist, dass eine Durchbruchspannung zwischen den beiden Elektroden in der Trägerflüssigkeit überschritten ist und ein Funke zwischen den Elektroden erzeugbar ist, so dass ein lokales Verdampfen der Trägerflüssigkeit bewirkbar ist; und
wobei mit dem Verdampfen eine Welle mit einem derart starken Druckgradienten in dem flüssigen Gemisch erzeugbar ist, dass der Druckgradient beim Auftreffen auf eine zelluläre Membran einen derart hohen Scherkraftgradienten aufweist, dass die zelluläre Membran aufbricht und das Öl freigesetzt ist.

2. System nach Anspruch 1, wobei die Spannungszufuhrvorrichtung für die Erzeugung eines Kurzpulses ausgebildet ist, der eine Impulszeit aufweist, die maximal im Mikro-Sekundenbereich liegt.

3. System nach Anspruch 1 oder 2, wobei die Spannungszufuhrvorrichtung Spannungsimpulse erzeugt, die eine Einzelpuls-Energie von mindestens ca. 500 Millijoule aufweisen.

4. System nach einem der Ansprüche 1 bis 3, wobei die Spannungszufuhrvorrichtung Spannungsimpulse erzeugt, die eine Repetitionsrate von mindestens ca. 0,5 Hz aufweisen.

5. System nach einem der Ansprüche 1 bis 4, wobei die Spannungszufuhrvorrichtung aufweist:
- eine elektrische Energieversorgung (26);
- eine Speichereinrichtung (28) zum temporären Speichern von elektrischer Spannung; und
- eine Steuervorrichtung (30) zum Kontrollieren einer Entladung der in der Speichereinrichtung gespeicherten elektrischen Spannung.

6. System nach Anspruch 5, wobei die Speichereinrichtung wenigstens eine Kondensatorbank aus mehreren Kondensatoren aufweist, mit denen Hochspannungspulse erzeugbar sind.

7. Verfahren (100) zur Extraktion von Ölen zur Gewinnung von Kohlenwasserstoffen für Fahrzeugkraftstoffe, aufweisend die folgenden Schritte:
a) Zurverfügungstellen (110) eines flüssigen Gemischs von ölhaltigen Pflanzenteilen und einer Trägerflüssigkeit; wobei die ölhaltigen Pflanzenteile zelluläre Membranen aufweisen, die Bereiche mit Öl umschließen;
b) Anordnen (112) wenigstens eines Elektrodenpaars in der Flüssigkeit, bei dem die Elektroden beabstandet voneinander sind; und
c) Anlegen (114) wenigstens eines Spannungsimpulses zwischen den Elektroden des wenigstens einen Elektrodenpaars;
wobei der wenigstens eine Spannungsimpuls derart hoch ist, dass eine Durchbruchspannung zwischen den beiden Elektroden in der Trägerflüssigkeit überschritten wird und ein Funke zwischen den Elektroden erzeugt wird, so dass es zu einem lokalen Verdampfen der Trägerflüssigkeit kommt; und
wobei das Verdampfen eine Welle mit einem derart starken Druckgradienten in dem flüssigen Gemisch erzeugt, dass der Druckgradient beim Auftreffen auf eine zelluläre Membran einen derart hohen Scherkraftgradienten aufweist, dass es zu einem Aufbrechen der zellulären Membran kommt und das Öl freigesetzt wird.

8. Verfahren nach Anspruch 7, wobei ein Spannungsimpuls derart angelegt wird, dass es zur Ausbildung einer Stoßfront kommt.

9. Verfahren nach Anspruch 7 oder 8, wobei die Pflanzenteile Algen sind, und die Trägerflüssigkeit Wasser ist.

10. Verfahren nach Anspruch 7, 8 oder 9, wobei durch das Anlegen der Spannungsimpulse ein Öl-Wasser-Biomassengemisch erzeugt wird; und wobei in einem weiteren Schritt d) ein Separieren (116) des Öls und des Wassers erfolgt für weitere Aufbereitungsschritte (118) zur Herstellung von Kraftstoff für Fahrzeuge.

11. Verfahren nach Anspruch 7, 8, 9, oder 10, wobei die Welle in dem flüssigen Gemisch erzeugt wird, welches durch die Stoßwelle selbst derart verändert wird, dass das flüssige Gemisch in mehrere seiner Einzelteile zerlegt wird.

12. Verwendung einer Plasmaentladungsvorrichtung zur Induktion von Verdichtungsstößen in einem flüssigen Gemisch;
wobei das flüssige Gemisch eine Trägerflüssigkeit und ölhaltige Pflanzenteile aufweist, die zelluläre Membranen aufweisen, welche Bereiche mit Öl umschließen;
wobei die Plasmaentladungsvorrichtung mittels Spannungsimpulsen ein lokales Verdampfen des flüssigen Gemischs bewirkt, wodurch Druckgradienten in dem flüssigen Gemisch entstehen, die beim Auftreffen auf eine zelluläre Membran einen derart hohen Scherkraftgradienten aufweisen, dass die zelluläre Membran aufbricht und das Öl freigesetzt wird.
